# EUROPEAN PATENT APPLICATION

(11) **EP 2 415 835 A1**
(43) Date of publication of application: **08.02.2012**
(21) Application number: 10758873.3
(22) Date of filing: 01.04.2010
(51) Int. Cl.: C08L 33/06, B29C 45/37, C08K 5/00

(54) **METHACRYLIC RESIN COMPOSITION, MOLDED OBJECT, AND MANUFACTURING METHOD THEREFOR**

(30) Priority: 02.04.2009 JP 2009090276
(71) Applicant: Sumitomo Chemical Company, Limited, Tokyo 104-8260 (JP); National Institute of Advanced Industrial Science and Technology, Tokyo 100-8921 (JP); Itoh Optical Industrial Co., Ltd., Gamagori-shi, Aichi 443-0041 (JP)
(72) Inventor: YAMAZAKI, Kazuhiro, Saijo-shi Ehime 793-0030 (JP); WAKE, Takao, Saijo-shi Ehime 793-0030 (JP); KURIHARA, Kazuma, Tsukuba-shi Ibaraki 305-8562 (JP); NAKANO, Takashi, Tsukuba-shi Ibaraki 305-8562 (JP); SAITO, Yuji, Gamagori-shi Aichi 443-0041 (JP); NAKAGAWA, Yuki, Gamagori-shi Aichi 443-0041 (JP); SOUMA, Norihito, Toyokawa-shi Aichi 442-0061 (JP)
(74) Representative: Duckworth, Timothy John
(86) International application number: PCT/JP2010/056030
(87) International publication number: WO 2010/114102

(57) **Abstract**

Provided is a methacrylic resin composition to be used for molding by means of a metallic mold having a plurality of nano-scale concavo-convex patterns on the surface thereof. The methacrylic resin composition comprises a methacrylic resin (A) having an MFR at 230°C under a load of 3.8 kg within the range of 0.1 to 50; and at least one component (B) selected from the group consisting of higher fatty acid esters, higher aliphatic alcohols, higher fatty acids, higher fatty acid amides, and higher fatty acid metal salts, wherein the content of the component (B) is 0.2 to 0.5 parts by weight with respect to 100 parts by weight of the methacrylic resin (A).

## Description

### TECHNICAL FIELD

The present invention relates to a methacrylic resin composition suitable for use in molding by means of a metallic mold having a plurality of nano-scale concavo-convex patterns on the surface thereof, a molded object obtained by molding the methacrylic resin composition by means of the metallic mold, and a method for manufacturing the same.

### BACKGROUND ART

Since resin molded objects having nano-scale fine concavo-convex patterns on the surface thereof can exhibit properties such as low reflectivity, water-repellency, oil-repellency, and antifouling properties due to the fine structure, they are expected to be applied to optical elements and the like. As metallic molds for manufacturing such resin molded objects having nano-scale fine concavo-convex patterns on the surface thereof, for example, metallic molds having a plurality of nano-scale concavo-convex patterns on the surface thereof are proposed (Patent Documents 1 and 2).

### PRIOR ART DOCUMENTS

### PATENT DOCUMENTS

Patent Document 1: JP 2008-143162 A
Patent Document 2: JP 2008-168610 A

### SUMMARY OF THE INVENTION

### PROBLEMS TO BE SOLVED BY THE INVENTION

In order to obtain a molded object having nano-scale fine concavo-convex patterns on the surface thereof by means of the metallic mold described in Patent Document 1 or 2, a molten methacrylic resin is injected into this metallic mold and is allowed to cool, and then a molded object is demolded from the metallic mold. However, depending on the kind of the methacrylic resin employed, there are problems such that the molded object is not necessarily demolded from the metallic mold satisfactorily, leading to breakage of the obtained molded object, and fine concavo-convex patterns may not be transferred to the surface of the molded object precisely, thus the molded object cannot exhibit sufficient low reflectivity for use in optical elements and the like.

A main objective of the present invention is to provide a methacrylic resin composition which, when molded by means of a metallic mold having a plurality of nano-scale concavo-convex patterns on the surface thereof, is capable of being demolded from the metallic mold satisfactorily and forming nano-scale fine concavo-convex patterns on the surface of the obtained molded object satisfactorily.
Further, another objective of the present invention is to provide a molded object having nano-scale fine concavo-convex patterns on the surface thereof and made of a methacrylic resin composition, and a method for manufacturing the same.

### MEANS FOR SOLVING THE PROBLEMS

The present inventors made various investigations in order to solve the above problems. Consequently, they found out that, when molding is performed by means of a metallic mold having a plurality of nano-scale concavo-convex patterns on the surface thereof, the use of a resin composition as a molding material, in which a specific amount of at least one component selected from the group consisting of higher fatty acid esters, higher aliphatic alcohols, higher fatty acids, higher fatty acid amides, and higher fatty acid metal salts is added to a methacrylic resin having a specific MFR (Melt Flow Rate), makes it possible to demold the resin composition from the metallic mold satisfactorily and form fine concavo-convex patterns on the surface of the obtained molded object satisfactorily, and thus the present invention was completed.

That is, the methacrylic resin composition of the present invention is used for molding by means of a metallic mold having a plurality of nano-scale concavo-convex patterns on the surface thereof. The methacrylic resin composition comprising: a methacrylic resin (A) having an MFR at 230°C under a load of 3.8 kg within the range of 0.1 to 50; and at least one component (B) selected from the group consisting of higher fatty acid esters, higher aliphatic alcohols, higher fatty acids, higher fatty acid amides, and higher fatty acid metal salts, wherein the content of the component (B) is 0.2 to 0.5 parts by weight with respect to 100 parts by weight of the methacrylic resin (A).

The molded object of the present invention is a molded object having nano-scale concavo-convex patterns on the surface thereof and made of a methacrylic resin composition containing: a methacrylic resin (A) having an MFR at 230°C under a load of 3.8 kg within the range of 0.1 to 50; and at least one component (B) selected from the group consisting of higher fatty acid esters, higher aliphatic alcohols, higher fatty acids, higher fatty acid amides, and higher fatty acid metal salts, wherein the content of the component (B) is 0.2 to 0.5 parts by weight with respect to 100 parts by weight of the methacrylic resin (A).

The method for manufacturing a molded object of the present invention is a method including: melting a molding material; injecting the molten molding material into a metallic mold having a plurality of nano-scale concavo-convex patterns on the surface thereof; allowing the molding material to cool; and demolding a molded object from the metallic mold, wherein the molding material is a methacrylic resin composition containing: a methacrylic resin (A) having an MFR at 230°C under a load of 3.8 kg within the range of 0.1 to 50; and at least one component (B) selected from the group consisting of higher fatty acid esters, higher aliphatic alcohols, higher fatty acids, higher fatty acid amides, and higher fatty acid metal salts, the content of the component (B) being 0.2 to 0.5 parts by weight with respect to 100 parts by weight of the methacrylic resin (A).

### ADVANTAGES OF THE INVENTION

The methacrylic resin composition of the present invention is, when molded by means of a metallic mold having a plurality of nano-scale concavo-convex patterns on the surface thereof, capable of being demolded from the metallic mold satisfactorily and forming a nano-scale fine structure on the surface of the obtained molded object satisfactorily. Thus, a molded object having nano-scale fine concavo-convex patterns on the surface thereof and made of the methacrylic resin composition can be obtained easily. This molded object exhibits excellent properties such as low reflectivity, water-repellency, oil-repellency, and antifouling properties due to the fine concavo-convex patterns, and is suitable for use in, for example, optical elements.

### EMBODIMENTS FOR CARRYING OUT THE INVENTION

### (Methacrylic Resin Composition)

The methacrylic resin composition of the present invention contains a methacrylic resin (A) and at least one component (B) (hereinafter, referred to as a "specific compound (B)" in some cases) selected from the group consisting of higher fatty acid esters, higher aliphatic alcohols, higher fatty acids, higher fatty acid amides, and higher fatty acid metal salts.

The methacrylic resin (A) is a homopolymer, a copolymer, or a derivative thereof, obtained by polymerizing a monomer component mainly composed of methyl methacrylate. In particular, the monomer component mainly composed of methyl methacrylate contains methyl methacrylate in an amount of 50% by weight or more, and other monomers copolymerizable with methyl methacrylate as needed. The monomer copolymerizable with methyl methacrylate is not particularly limited, and may be a monofunctional monomer having one double bond capable of radical polymerization in a molecule thereof or a multifunctional monomer having two or more double bonds capable of radical polymerization in a molecule thereof. The monomer copolymerizable with methyl methacrylate may be used alone or two or more kinds thereof may be used in combination.

Preferable examples of the monomer copolymerizable with methyl methacrylate include acrylic esters such as methyl acrylate, ethyl acrylate, propyl acrylate, n-butyl acrylate, sec-butyl acrylate, tert-butyl acrylate, cyclohexyl acrylate, benzil acrylate, 2-ethylhexyl acrylate, 2-hydroxyethyl acrylate, and cyclopentadiene acrylate. Among these, methyl acrylate and ethyl acrylate are particularly preferable. When the acrylic esters are used as the monomer copolymerizable with methyl methacrylate, preferably 85% to 100% by weight is methyl methacrylate and 0% to 15% by weight is the acrylic esters, and more preferably 92% to 99.9% by weight is methyl methacrylate and 0.1% to 8% by weight is the acrylic esters.

Examples of the monomer copolymerizable with methyl methacrylate include, in addition to the acrylic esters described above, methacrylic esters such as ethyl methacrylate, propyl methacrylate, n-butyl methacrylate, sec-butyl methacrylate, tert-butyl methacrylate, 2-ethylhexyl methacrylate, cyclohexyl methacrylate, benzil methacrylate, and cyclopentadiene methacrylate; unsaturated carboxylic acids and anhydrides thereof such as acrylic acid, methacrylic acid, maleic acid, itaconic acid, maleic anhydride, and itaconic anhydride; nitrogen-containing monomers such as acrylamide, methacrylamide, acrylonitrile, and methacrylonitrile; and styrene monomers such as styrene and α-methyl styrene. Further, polybutadiene or a styrenebutadiene copolymer may be dissolved in the monomer component and allowed for polymerization. In that case, the methacrylic resin composition of the present invention is a so-called impact-resistant methacrylic resin.

The methacrylic resin (A) has an MFR at 230°C under a load of 3.8 kg within the range of 0.1 to 50. The MFR is preferably 1 to 35, more preferably 1.5 to 10. If the MFR is less than 0.1, the resin composition has a high viscosity at the time of melting, resulting in a difficulty in molding (injection molding) by means of a specific metallic mold described later. On the other hand, if the MFR is more than 50, the resin composition has low mechanical strength and low heat resistance, and therefore, when molded (injection molded) by means of a specific metallic mold described later, the resin composition has difficulty in being demolded from the metallic mold, leading to breakage of the obtained molded object, and fine concavo-convex patterns of the specific metallic mold described later cannot be transferred to the molded object precisely, thus the molded object cannot exhibit sufficient properties (for example, low reflectivity) for use in optical elements and the like.

In the specific compound (B), the higher fatty acid ester is generally a compound with a structure resulting from dehydration condensation between a fatty acid having about 10 to 22 carbon atoms and a monovalent aliphatic alcohol having about 1 to 22 carbon atoms, or a compound with a structure resulting from dehydration condensation between a fatty acid having about 10 to 22 carbon atoms and glycerin. The higher fatty acid ester may be used alone or two or more kinds thereof may be used in combination.

Examples of the compound with a structure resulting from dehydration condensation between a fatty acid having about 10 to 22 carbon atoms and a monovalent aliphatic alcohol having about 1 to 22 carbon atoms include saturated fatty acid alkyl esters such as methyl laurate, ethyl laurate, propyl laurate, butyl laurate, octyl laurate, methyl palmitate, ethyl palmitate, propyl palmitate, butyl palmitate, octyl palmitate, methyl stearate, ethyl stearate, propyl stearate, butyl stearate, octyl stearate, stearyl stearate, myristyl myristate, methyl behenate, ethyl behenate, propyl behenate, butyl behenate, and octyl behenate; and unsaturated fatty acid alkyl esters such as methyl oleate, ethyl oleate, propyl oleate, butyl oleate, octyl oleate, methyl linoleate, ethyl linoleate, propyl linoleate, butyl linoleate, and octyl linoleate. Among these, alkyl stearates such as methyl stearate, ethyl stearate, butyl stearate, and octyl stearate are preferable, and methyl stearate is more preferable.

Examples of the compound with a structure resulting from dehydration condensation between a fatty acid having about 10 to 22 carbon atoms and glycerin include saturated fatty acid glycerides such as lauric acid monoglyceride, lauric acid diglyceride, lauric acid triglyceride, palmitic acid monoglyceride, palmitic acid diglyceride, palmitic acid triglyceride, stearic acid monoglyceride, stearic acid diglyceride, stearic acid triglyceride, behenic acid monoglyceride, behenic acid diglyceride, and behenic acid triglyceride; and unsaturated fatty acid glycerides such as oleic acid monoglyceride, oleic acid diglyceride, oleic acid triglyceride, linoleic acid monoglyceride, linoleic acid diglyceride, and linoleic acid triglyceride. Among these, stearic acid glycerides such as stearic acid monoglyceride, stearic acid diglyceride, and stearic acid triglyceride are preferable, and stearic acid monoglyceride is more preferable.

In the specific compound (B), the higher aliphatic alcohols are generally aliphatic alcohols having about 10 to 22 carbon atoms, and may be monohydric alcohols or polyhydric alcohols. Specific examples thereof include saturated aliphatic alcohols such as lauryl alcohol, palmityl alcohol, stearyl alcohol, isostearyl alcohol, behenyl alcohol, myristyl alcohol, and cetyl alcohol; and unsaturated aliphatic alcohols such as oleyl alcohol and linoleyl alcohol. Among these, stearyl alcohol is preferable. The higher aliphatic alcohol may be used alone or two or more kinds thereof may be used in combination.

In the specific compound (B), the higher fatty acids are generally fatty acids having about 10 to 22 carbon atoms, and examples thereof include saturated fatty acids such as caproic acid, caprylic acid, capric acid, lauric acid, myristic acid, palmitic acid, stearic acid, arachidic acid, behenic acid, lignoceric acid, and 12-hydroxyoctadecanoic acid; and unsaturated fatty acids such as palmitoleic acid, oleic acid, linoleic acid, linolenic acid, setoleic acid, erucic acid, and ricinoleic acid. The higher fatty acid may be used alone or two or more kinds thereof may be used in combination.

In the specific compound (B), the higher fatty acid amides are generally a compound with a structure resulting from dehydration condensation between a fatty acid having about 10 to 22 carbon atoms and ammonia or an amino compound, and examples thereof include saturated fatty acid amides such as lauric acid amide, palmitic acid amide, stearic acid amide, and behenic acid amide; unsaturated fatty acid amides such as oleamide, linoleic acid amide, and erucamide; and amides such as ethylenebis lauric acid amide, ethylenebis palmitic acid amide, ethylenebis stearic acid amide, and N-oleylstearamide. Among these, stearic acid amide and ethylenebis stearic acid amide are preferable. The higher fatty acid amide may be used alone or two or more kinds thereof may be used in combination.

In the specific compound (B), examples of the higher fatty acid metal salts include sodium salts, potassium salts, calcium salts, and barium salts of the above-mentioned higher fatty acids. The higher fatty acid metal salt may be used alone or two or more kinds thereof may be used in combination.

In the methacrylic resin composition of the present invention, the content of the specific compound (B) is 0.2 to 0.5 parts by weight with respect to 100 parts by weight of the methacrylic resin (A). If the content of the specific compound (B) is less than this range, when molding (injection molding) is performed by means of a specific metallic mold described later, it is not possible to demold the molded object from the metallic mold satisfactorily and transfer fine concavo-convex patterns to the surface of the molded object satisfactorily. On the other hand, if the content of the specific compound (B) is more than this range, stain is likely adhered to the metallic mold. When two or more compounds are contained in the specific compound (B), the total amount of them is preferably within the range described above.

The methacrylic resin composition of the present invention may contain, in addition to the methacrylic resin (A) and the specific compound (B) described above, additives such as an ultraviolet absorber, a light diffusing agent, an antioxidant, a colorant, a heat stabilizer, an impact resistance improver, a flame retardant, and an antistatic agent, as needed.

The methacrylic resin composition of the present invention can be manufactured by a method such as (I) a method of polymerizing the monomer component constituting the methacrylic resin (A) via a polymerization method such as suspension polymerization, solution polymerization, or bulk polymerization, followed by placing the obtained polymer and the specific compound (B) in a single screw extruder or twin screw extruder and mixing them by heat-melting and kneading, (II) a method of mixing the monomer component constituting the methacrylic resin (A) with the specific compound (B), and polymerizing the mixture via a polymerization method such as suspension polymerization, solution polymerization, or bulk polymerization, and (III) a method of attaching the specific compound (B) to the surface of pellets or beads composed of the polymer described above (I), and mixing them simultaneously upon molding.

The methacrylic resin composition of the present invention as described above is to be used for molding by means of a metallic mold (hereinafter, referred to as a "specific metallic mold" in some cases) having a plurality of nano-scale concavo-convex patterns in an island pattern on the surface thereof. The methacrylic resin composition containing the methacrylic resin (A) and the specific compound (B) in the ratio described above is, when molded by means of the specific metallic mold, capable of demolding the molded object from the metallic mold satisfactorily and forming a nano-scale fine structure on the surface of the obtained molded object satisfactorily.

The specific metallic mold is not particularly limited as long as it has a plurality of nano-scale concavo-convex patterns on the surface thereof. For example, the metallic molds disclosed in Patent Documents 1 and 2 described above may be used.
The specific metallic mold may be manufactured by a method of etching by using a masking layer having a nano-scale fine structure, for example. In particular, for example, the method may include forming an etching transfer layer composed of one or more layers on the surface of a metallic mold core with a film-forming machine, then forming a film of a thin-film substance mainly composed of silver, gold, platinum, or palladium thereon for formation of island-shaped fine particles, and subjecting the film to heat, light, or gas-decomposition to cause aggregation, nucleation, or decomposition, thus forming a structure of island-shaped fine particles randomly arranged in predetermined intervals. Thereafter, with an etching machine, a reactant gas or solution that allows the etching rate of the etching transfer layer to be higher than that of the structure of island-shaped fine particles is used, and thereby nano-scale fine concavo-convex patterns can be produced on the surface of the metallic mold.

In the specific metallic mold, the average distance between peaks of the projections on the surface thereof is preferably 1 to 1000 nm. If the average distance between peaks of the projections is less than 1 nm, fine concavo-convex patterns may not be satisfactorily transferred to the surface of the molded object formed by means of the metallic mold. On the other hand, if it is more than 1000 nm, the molded object formed by means of the metallic mold may not exhibit properties such as low reflectivity, water-repellency, oil-repellency, and antifouling properties sufficiently. In particular, when a molded object with low reflectivity is intended, the average distance between peaks of the projections on the surface of the metallic mold is preferably 400 nm, which is a visible wavelength, or less, and more preferably 250 nm or less. Here, if the distance between peaks of the projections on the surface of the metallic mold varies largely, the properties described above are less likely to be given to the obtained molded object.

In the specific metallic mold, the average height of the projections on the surface thereof is preferably 60 to 160 nm. If the average height of the projections is less than 60 nm, the molded object formed by means of the metallic mold may not exhibit properties such as low reflectivity, water-repellency, oil-repellency, and antifouling properties sufficiently. On the other hand, if it is more than 160 nm, fine concavo-convex patterns may not be satisfactorily transferred to the surface of the molded object formed by means of the metallic mold. Here, if the height of the projections on the surface of the metallic mold varies largely, the properties described above are less likely to be given to the obtained molded object.

In the specific metallic mold, the ratio (hereinafter, referred to as an "aspect ratio of projections" in some cases) of the average height of the projections to the average distance between peaks of the projections on the surface thereof is preferably 1.0 or more. It is more preferably 1.3 or more, further more preferably 1.5 or more. If the aspect ratio of projections is less than 1.0, the molded object formed by means of the metallic mold may not exhibit properties such as low reflectivity, water-repellency, oil-repellency, and antifouling properties sufficiently.

### (Molded Object and Manufacturing Method Therefor)

The molded object of the present invention is a molded object having nano-scale concavo-convex patterns on the surface thereof and made of the above-described methacrylic resin composition (the methacrylic resin composition of the present invention) containing the methacrylic resin (A) and the specific compound (B) in the ratio described above. Such a molded object can be obtained by a method for manufacturing a molded object described later. The nano-scale concavo-convex patterns on the surface of the molded object are formed by transferring the concavo-convex patterns on the surface of the specific metallic mold described above. Therefore, the average distance between peaks of the projections on the surface of the molded object of the present invention is preferably the same as that of the specific metallic mold, which is 1 to 1000 nm. Also, the ratio of the average height of the projections to the average distance between peaks of the projections on the surface of the molded object of the present invention is preferably the same as that of the specific metallic mold, which is 1.0 or more.

In the method for manufacturing the molded object of the present invention, the above-described methacrylic resin composition containing the methacrylic resin (A) and the specific compound (B) in the ratio described above is used as a molding material. The molding material is molten and thereafter injected into the specific metallic mold described above, allowed to cool, and then demolded from the metallic mold. More specifically, for example, the method may include charging the methacrylic resin composition of the present invention through a hopper, rotating and retracting a screw, weighing the resin composition in a cylinder, allowing the resin composition to melt, filling the molten resin into a metallic mold by pressing, and maintaining the pressure for a certain time until the metallic mold becomes sufficiently cool, followed by opening the mold to take out a molded object.

The melting temperature of the molding material (methacrylic resin composition of the present invention), which is the temperature of melting the resin composition, may be set according to the MFR and the like of the methacrylic resin, but generally 220 to 290°C is preferable. If the melting temperature is less than 220°C, the molten resin composition has a high viscosity, resulting in a difficulty in molding, and fine concavo-convex patterns on the surface of the metallic mold may not be transferred to the obtained molded object satisfactorily, and thus the molded object may not exhibit desired properties sufficiently. On the other hand, if the melting temperature is more than 290°C, decomposition of the methacrylic resin is likely to occur, and defects such as gas bubbles and silver streaks may be generated in the obtained molded object.

The temperature of the metallic mold when the molding material is injected thereinto is preferably 60 to 120°C. If the temperature of the metallic mold is less than 60°C, fine concavo-convex patterns may not be satisfactorily transferred, and the obtained molded object may not exhibit desired properties sufficiently. On the other hand, if the temperature of the metallic mold is more than 120°C, after opening the mold to take out the molded object, the molded object may deform or shrink. The temperature of the metallic mold does not have to be necessarily constant from beginning to end, and it is also possible to employ a method in which the temperature is set at a high level at the time of filling the resin composition and is decreased at the time of maintaining the pressure, for example.
The pressure at the time of maintaining the pressure after filling the resin composition into the metallic mold is better as it is higher, because fine concavo-convex patterns are less likely to be transferred satisfactorily when the pressure is excessively low. In general, the pressure at the time of maintaining the pressure is preferably 30 to 120 MPa.

The thus-obtained molded object of the present invention has nano-scale concavo-convex patterns on the surface thereof and can exhibit properties such as low reflectivity, water-repellency, oil-repellency, and antifouling properties, therefore it is suitable for various uses such as optical elements (for example, a lens).

### EXAMPLES

The present invention will be explained in detail with reference to examples below; however, the present invention is not limited to the examples.
The evaluation of the obtained molded object was performed as follows.

### <Appearance>

The appearance of obtained molded objects was observed visually. The molded object was evaluated as "o" when there were no cracks, and was evaluated as "×" when there were cracks.

### <Reflectance (reflectivity)>

A spectrophotometer ("USPM-RU-2" manufactured by Olympus Corporation) was used to measure reflectance (%) within the visual light range (380 to 780 nm). Here, if the reflectance is 1.0% or less, the product is suitable for use in, for example, a lens for glasses or optical apparatuses.

### (Reference Example - Production of Metallic Mold)

Gold was formed into a film on the surface of a metallic mold as a raw material, and thereafter heated to obtain a metallic mold base material on the outermost surface thereof a protective layer composed of metal nanoparticles was formed. Next, the metallic mold base material was subjected to reactive dry etching to form nano-scale concavo-convex patterns on the outermost surface thereof, and thereby a specific metallic mold was produced.

The obtained specific metallic mold had a plurality of nano-scale concavo-convex patterns in an island pattern on the surface thereof. The concavo-convex patterns on the surface of the metallic mold were observed with an atomic force microscope ("NanoNavi Station" manufactured by SII Nano Technology Inc.). The results are shown as below. That is, the distance between peaks of the projections on the surface was normally distributed within a range of 100 ± 40 nm, and the average distance between peaks of the projections was 100 nm. The height of the projections was normally distributed within a range of 60 to 160 nm, and the average height of the projections was 150 nm. The aspect ratio of projections on the surface was 1.5.

### (Examples 1-1 to 1-6 and Comparative Examples 1-1 to 1-2)

A monomer component composed of 99% by weight of methyl methacrylate and 1% by weight of methyl acrylate was polymerized by continuous bulk polymerization to obtain a methacrylic resin in the form of pellets. The MFR of the obtained methacrylic resin was measured at 230°C under a load of 3.8 kg according to JIS K 7210(1990)A, and it was 2.3.

Next, into 100 parts by weight of the methacrylic resin in the form of pellets obtained above, compounds shown in Table 1 were each blended in an amount shown in Table 1. The blended materials were each molten and mixed by using a vent-type single screw extruder with a screw diameter of 40 mm. Then, strands extruded from a die were allowed to cool with water and cut with a cutter to obtain methacrylic resin compositions (1) to (6) and (C1) to (C2) in the form of pellets.

**Table 1**

| | Methacrylic Resin Composition | | | | | | | |
|---|---|---|---|---|---|---|---|---|
| | (1) | (2) | (3) | (4) | (5) | (6) | (C1) | (C2) |
| Stearyl alcohol | 0.2 | 0.3 | 0.4 | 0.5 | - | - | - | 0.1 |
| Stearic acid amide | - | - | - | - | 0.2 | 0.12 | - | |
| Stearic acid monoglyceride | - | - | - | - | - | 0.08 | - | - |

### (Examples 2-1 to 2-10 and Comparative Examples 2-1 to 2-4)

The metallic mold produced in the reference example was attached to an injection molding machine (50-t molding machine). Then, the methacrylic resin composition shown in Table 2 or 3 was charged into a hopper. The temperature of the metallic mold was set to the temperature shown in Table 2 or 3, and the melting temperature of the resin composition was set to 280°C. After the molten resin was injected into the metallic mold, the resin was maintained under a pressure of 75 MPa. This was allowed to cool sufficiently, and then the mold was opened to take out a molded object, and thereby a molded object having nano-scale concavo-convex patterns on the surface thereof was obtained. The appearance and reflectance of each of the obtained molded object are shown in Tables 2 and 3.

**Table 2**

| | Ex. 2-1 | Ex. 2-2 | Ex. 2-3 | Ex. 2-4 | Ex. 2-5 | Ex. 2-6 | Ex. 2-7 | Ex. 2-8 |
|---|---|---|---|---|---|---|---|---|
| Methacrylic resin composition | (1) | (1) | (2) | (2) | (3) | (3) | (4) | (4) |
| Metallic molt temperature (°C) | 95 | 115 | 95 | 115 | 95 | 115 | 95 | 115 |
| Melting temperature of resin (°C) | 280 | 280 | 280 | 280 | 280 | 280 | 280 | 280 |
| Appearance | ○ | ○ | ○ | ○ | ○ | ○ | ○ | ○ |
| Reflectance (%) | 1. 0 | 0.0 | 0. 5 | 0.0 | 0.5 | 0.0 | 0.4 | 0.0 |

**Table 3**

| | Comp. Ex. 2-1 | Comp. Ex. 2-2 | Comp. Ex. 2-3 | Comp. Ex. 2-4 | Ex. 2-9 | Ex. 2-10 |
|---|---|---|---|---|---|---|
| Methacrylic resin composition | (C1) | (C1) | (C2) | (C2) | (5) | (6) |
| Metallic mold temperature (°C) | 95 | 115 | 95 | 115 | 115 | 115 |
| Melting temperature of resin (°C) | 280 | 280 | 280 | 280 | 280 | 280 |
| Appearance | ○ | × | ○ | × | ○ | ○ |
| Reflectance (%) | 2. 0 | 0. 3 | 1. 2 | 0. 0 | 0. 0 | 0. 0 |

## Claims

1. A methacrylic resin composition to be used for molding by means of a metallic mold having a plurality of nano-scale concavo-convex patterns on the surface thereof, comprising:
a methacrylic resin (A) having an MFR at 230°C under a load of 3.8 kg within the range of 0.1 to 50; and at least one component (B) selected from the group consisting of higher fatty acid esters, higher aliphatic alcohols, higher fatty acids, higher fatty acid amides, and higher fatty acid metal salts, wherein the content of the component (B) is 0.2 to 0.5 parts by weight with respect to 100 parts by weight of the methacrylic resin (A).

2. The methacrylic resin composition according to claim 1, wherein the average distance between peaks of the projections on the surface of the metallic mold is 1 to 1000 nm.

3. The methacrylic resin composition according to claim 1 or 2, wherein the ratio of the average height of the projections to the average distance between peaks of the projections on the surface of the metallic mold is 1.0 or more.

4. A molded object having nano-scale concavo-convex patterns on the surface thereof and comprising a methacrylic resin composition comprising: a methacrylic resin (A) having an MFR at 230°C under a load of 3.8 kg within the range of 0.1 to 50; and at least one component (B) selected from the group consisting of higher fatty acid esters, higher aliphatic alcohols, higher fatty acids, higher fatty acid amides, and higher fatty acid metal salts, wherein the content of the component (B) is 0.2 to 0.5 parts by weight with respect to 100 parts by weight of the methacrylic resin (A).

5. The molded object according to claim 4, wherein the average distance between peaks of the projections on the surface thereof is 1 to 1000 nm.

6. The molded object according to claim 4 or 5,
wherein the ratio of the average height of the projections to the average distance between peaks of the projections on the surface thereof is 1.0 or more.

7. A method for manufacturing a molded object, comprising: melting a molding material; injecting the molten molding material into a metallic mold having a plurality of nano-scale concavo-convex patterns on the surface thereof; allowing the molding material to cool; and demolding a molded object from the metallic mold, wherein
the molding material comprises a methacrylic resin composition comprising: a methacrylic resin (A) having an MFR at 230°C under a load of 3.8 kg within the range of 0.1 to 50; and at least one component (B) selected from the group consisting of higher fatty acid esters, higher aliphatic alcohols, higher fatty acids, higher fatty acid amides, and higher fatty acid metal salts, the content of the component (B) being 0.2 to 0.5 parts by weight with respect to 100 parts by weight of the methacrylic resin (A).

8. The method for manufacturing a molded object according to claim 7, wherein the average distance between peaks of the projections on the surface of the metallic mold is 1 to 1000 nm.

9. The method for manufacturing a molded object according to claim 7 or 8, wherein the ratio of the average height of the projections to the average distance between peaks of the projections on the surface of the metallic mold is 1.0 or more.

10. The method for manufacturing a molded object according to any one of claims 7 to 9, wherein the melting temperature of the molding material is 220 to 290°C.

11. The method for manufacturing a molded object according to any one of claims 7 to 10, wherein the temperature of the metallic mold when the molding material is injected thereinto is 60 to 120°C.
